# EUROPÄISCHE PATENTSCHRIFT

(11) **EP 2 704 858 B1**
(45) Veröffentlichungstag und Bekanntmachung des Hinweises auf die Patenterteilung: **20.02.2019**
(21) Anmeldenummer: 12719358.9
(22) Anmeldetag: 02.05.2012
(51) Int. Cl.: B07B 4/02, B07B 7/08, B07B 7/10, B01D 45/12, B07B 11/04, B07B 11/06

(54) **VORRICHTUNG UND VERFAHREN ZUM TRENNEN VON AUFGABEGUT IN ZUMINDEST EINE LEICHTGUTFRAKTION UND EINE SCHWERGUTFRAKTION**
DEVICE AND METHOD FOR SEPARATING FEEDSTOCK INTO AT LEAST ONE LIGHT MATERIAL FRACTION AND A HEAVY MATERIAL FRACTION
DISPOSITIF ET PROCÉDÉ DE SÉPARATION D'UNE MATIÈRE DE CHARGE EN AU MOINS UNE FRACTION LÉGÈRE ET UNE FRACTION LOURDE

(30) Priorität: 03.05.2011 EP 11164671
(43) Veröffentlichungstag der Anmeldung: 12.03.2014
(73) Patentinhaber: Bühler AG, 9240 Uzwil (CH)
(72) Erfinder: MOOSMANN, Jürgen, 88276 Berg (DE); FÄSSLER, Bruno, CH-9050 Appenzell (CH)
(74) Vertreter: Hepp Wenger Ryffel AG
(86) Internationale Anmeldenummer: PCT/EP2012/058004
(87) Internationale Veröffentlichungsnummer: WO 2012/150250

(56) Entgegenhaltungen:
- EP-B1- 1 263 276
- WO-A1-02/02247
- DE-A1- 2 535 881
- DE-C1- 4 112 556
- GB-A- 2 067 925
- US-A- 4 465 194
- US-A- 5 409 118

## Beschreibung

Die vorliegende Erfindung betrifft das Gebiet der Trennung von Aufgabegut in zumindest eine Leichtgutfraktion und eine Schwergutfraktion mit Merkmalen der unabhängigen Ansprüche.

Aus der EP 1 263 276 B1 ist eine Saug-Trennvorrichtung mit glatter Durchströmung bekannt, die mit einer gekrümmten zentrifugalen Trennvorrichtung, einem Teilauslass, einem Querströmungs-Rotor und einem Gehäuse mit einem pneumatischen Rohr ausgebildet ist. Hierdurch wird eine Fraktionierung von Aufgabegut ermöglicht.

Aus der DE 41 12 556 C ist eine Vorrichtung und ein Verfahren zum Streuen des Streuguts bei der Herstellung von Faserplatten bekannt. Dabei wird Streugut mittels eines Förderbandes aus einem Streugutbunker in einen Windsichter gefördert. In dem Windsichter wird eine Leichtgutfraktion über eine pneumatische Förderleitung in einem Streugutzyklon eingeleitet, wo anschließend die Leichtgutfraktion von der Luft getrennt wird, wobei die Luft in den Windsichter zurückgeführt wird.

Diese Vorrichtung weist jedoch den Nachteil auf, dass die Zuführung des Aufgabeguts in die Vorrichtung nicht ausreichend kontrollierbar ist über die axiale Länge der Vorrichtung. Zudem wird durch die seitliche Zufuhr des Aufgabeguts die Standfläche der Vorrichtung vergrössert.

Es ist daher eine Aufgabe der vorliegenden Erfindung, die Nachteile des Bekannten zu vermeiden, insbesondere also eine Vorrichtung und ein Verfahren bereitzustellen, mit denen Aufgabegut in zumindest eine Leichtgutfraktion und zumindest eine Schwergutfraktion trennbar ist, wobei die Fraktioniervorrichtung ein zuverlässiges Kontrollieren der Zufuhr des Aufgabeguts in eine Trennvorrichtung der Fraktioniervorrichtung erlaubt und zudem eine kompakte Bauweise der Fraktioniervorrichtung erreicht wird. Eine weitere Aufgabe der vorliegenden Erfindung ist die Bereitstellung einer Vorrichtung und eines Verfahrens, mit denen Aufgabegut in eine Fraktioniervorrichtung energetisch günstig getrennt werden kann.

Diese Aufgaben werden durch eine Vorrichtung sowie ein Verfahren gemäss den unabhängigen Ansprüchen gelöst.

Die erfindungsgemässe Fraktioniervorrichtung zum Trennen von Aufgabegut in zumindest eine Leichtgutfraktion und zumindest eine Schwergutfraktion umfasst zumindest einen Einlass für das Aufgabegut, zumindest einen Leichtgutauslass für die Leichtgutfraktion und zumindest einen Schwergutauslass für die Schwergutfraktion. Zudem umfasst die Fraktioniervorrichtung einen Strömungserzeuger zur Erzeugung einer Gasströmung in der Fraktioniervorrichtung zur Trennung des Aufgabeguts in die Leichtgutfraktion und die Schwergutfraktion. Insbesondere wird durch den Strömungserzeuger eine Luftströmung erzeugt. Weiter umfasst die Fraktioniervorrichtung eine gekrümmte Zentrifugal-Trennvorrichtung zur Trennung zumindest der Leichtgutfraktion von der Gasströmung. In Förderrichtung des Aufgabeguts stromab vom Einlass ist eine Fördereinrichtung zum Fördern des Aufgabeguts in die Zentrifugal-Trennvorrichtung angeordnet. Zumindest 50% des Gases sind in der Fraktioniervorrichtung als Kreislaufströmung führbar. Insbesondere sind 55% bis 95%, bevorzugt 65% bis 90% und besonders bevorzugt 75% bis 85 % des Gases als Kreislaufströmung führbar. Die Kreislaufströmung wird um die Fördereinrichtung geführt.

Unter dem Begriff "Aufgabegut" wird im Sinne der vorliegenden Anmeldung ein Schüttgut verstanden, d.h. ein körniges oder auch stückiges Gut, welches in einer schüttfähigen Form vorliegt und insbesondere fliessfähig ist und/oder beispielsweise mittels Schneckenfördern förderbar ist.

Unter einer Trennung von Aufgabegut in zumindest eine Leichtgutfraktion und zumindest eine Schwergutfraktion wird im Sinne der vorliegenden Anmeldung eine relative Trennung nach dem spezifische Gewicht und / oder den Partikelgrössen des Aufgabeguts verstanden. Hierbei ist beispielsweise die Leichtgutfraktion diejenige Fraktion, die in einer Zentrifugal-Trennvorrichtung oder auch in einem aus dem Stand der Technik bekannten Zickzack-Sichter mittels einer Luftströmung vom Aufgabegut abtrennbar ist. Die Schwergutfraktion ist in diesem Beispiel diejenige Fraktion, die nicht mittels der Luftströmung förderbar ist und beispielsweise mittels der Wirkung der Gravitation in einen Schwergutauslass geführt wird.

Unter einem "Strömungserzeuger" wird im Sinne der vorliegenden Anmeldung eine Vorrichtung zur Erzeugung einer Gasströmung und insbesondere einer Luftströmung wie beispielsweise ein Ventilator, ein Gebläse oder aber auch eine Turbine verstanden.

Unter einer "gekrümmten Zentrifugal-Trennvorrichtung" wird im Sinne der vorliegenden Anmeldung eine gekrümmte Leitung geeignet zur Führung einer Gasströmung verstanden, bei der durch die Krümmung Zentrifugalkräfte auf in der Strömung mitgeführte Partikel, d.h. eine Leichtgutfraktion, ausgeübt werden zur Separierung der Partikel von der Gasströmung. Derartige Vorrichtungen sind beispielsweise aus der EP 1 263 276 B1, aus der EP 0 178 316 B1 sowie aus der EP 0 668 108 B1 bekannt.

Unter einer "Fördereinrichtung" wird im Sinne der vorliegenden Anmeldung eine Einrichtung geeignet zur Förderung von Aufgabegut verstanden. Beispielsweise eignen sich hierzu Schwingförderer, pneumatische Förderer, Kettenförderer, Förderbänder oder auch Förderschnecken sowie beliebige Kombinationen daraus.

Schwingförderer werden häufig auch als Vibroförderer bezeichnet und sind aus dem Stand der Technik bekannt. Derartige Schwingförderer können beispielsweise als Vibrowannen ausgebildet sein. Unter einer "Kreislaufströmung um die Fördereinrichtung" wird im Sinne der vorliegenden Erfindung verstanden, dass die durch den Strömungserzeuger erzeugte Gasströmung im Querschnitt durch die Zentrifugal-Trennvorrichtung um die in der Fraktioniervorrichtung angeordnete Fördereinrichtung geführt wird. Die Fördereinrichtung ist also zumindest abschnittsweise im Wesentlichen entlang und/oder im Wesentlichen parallel zu einer Längsachse der Fraktioniervorrichtung innerhalb zumindest einer teilweise geschlossenen Gasströmung der Kreislaufströmung angeordnet; insbesondere ist die Längsachse der Fraktioniervorrichtung in einem Winkelbereich von 45° bis 135° zur mittleren Kreislaufströmung angeordnet, bevorzugt von 80° bis 100° und besonders bevorzugt im Wesentlichen senkrecht zur mittleren Kreislaufströmung; im Sinne der Anmeldung bedeutet eine senkrechte Anordnung von Längsachse zur mittleren Kreislaufströmung einen Winkel von 90°. Die erfindungsgemässe Fraktioniervorrichtung weist nun den Vorteil auf, dass mittels der Fördereinrichtung das Aufgabegut kontrolliert in die Zentrifugal-Trennvorrichtung gefördert werden kann, um eine möglichst effiziente und zuverlässige Trennung zu erreichen. Dies kann beispielsweise dadurch erreicht werden, dass das Aufgabegut mittels der Fördereinrichtung in der Fraktioniervorrichtung möglichst gleichmässig verteilt wird, so dass in der Gasströmung im Wesentlichen überall die gleiche Menge Aufgabegut eingetragen wird, so dass die Trennung in eine Leichtgutfraktion und eine Schwergutfraktion überall im Wesentlichen unter gleichen Bedingungen erfolgen kann und somit die Zuverlässigkeit und Qualität der Trennung erhöht wird.

Ein weiterer Vorteil der erfindungsgemässen Fraktioniervorrichtung ist die kompaktere Bauweise der Fraktioniervorrichtung gegenüber dem Stand der Technik, was durch die Führung der Kreislaufströmung um die Fördereinrichtung erreicht wird. Hierdurch ist somit bei gleicher Grösse der Fraktioniervorrichtung im Vergleich zum Stand der Technik eine höhere Durchsatz-Leistung von Aufgabegut durch die Fraktioniervorrichtung möglich.

Ein weiterer Vorteil ist zudem die Rückführung von zumindest 50% des Gases als Kreislaufströmung, wodurch der Betrieb der Fraktioniervorrichtung energieeffizienter wird, da dadurch weniger Gas zugeführt und beschleunigt werden muss.

Bevorzugt ist die Fördereinrichtung als Schwingförderer ausgebildet. Insbesondere ist das Aufgabegut mittels der Fördereinrichtung zumindest im Wesentlichen senkrecht zu einer Querschnittsfläche durch die Kreislaufströmung förderbar.

Unter der Formulierung "im Wesentlichen senkrecht zur Querschnittsfläche durch die Kreislaufströmung" wird im Sinn der vorliegenden Anmeldung ein Schnitt parallel zur mittleren Kreislaufströmung durch die Fraktioniervorrichtung im Bereich der Zentrifugal-Trennvorrichtung verstanden. Beispielsweise liegt dieser Schnitt bei einer zylindrischen Ausbildung der Fraktioniervorrichtung senkrecht zur Längsachse der zylinderförmigen Fraktioniervorrichtung, wobei die Kreislaufströmung zumindest abschnittsweise entlang der Zylinderwand im Inneren des Zylinders geführt wird.

Die Ausbildung der Fördereinrichtung als Schwingförderer hat den Vorteil, dass Schwingförderer zuverlässig betreibbar sind und beispielsweise durch die Steuerung und/oder Regelung des Schwingförderer die Förderung des Aufgabeguts in die Zentrifugal-Trennvorrichtung kontrollierbar ist.

Das Aufgabegut wird beispielsweise durch den Schwingförderer in der Fraktioniervorrichtung möglichst gleichmässig verteilt, wobei das verteilte Aufgabegut beispielsweise durch einen Spalt vom Schwingförderer in die Zentrifugal-Trennvorrichtung gefördert wird. Zudem kann zumindest eine Stauklappe als Verteilhilfe für das Aufgabegut in die Zentrifugal-Trennvorrichtung in der Fraktioniervorrichtung angeordnet sein.

Besonders bevorzugt ist die Zentrifugal-Trennvorrichtung in Strömungsrichtung in einem Auslassbereich für die Leichtgutfraktion zumindest abschnittsweise sich verengend und insbesondere zumindest abschnittsweise konisch zulaufend ausgebildet.

Dies hat den Vorteil, dass durch die Verengung die Strömung beschleunigt wird zur weiteren Verbesserung der Trennung der Leichtgutfraktion von der Gasströmung in der Zentrifugal-Trennvorrichtung. Zudem wird durch diese Ausbildung des Auslassbereiches eine bessere Weiterförderbarkeit aus der Fraktioniervorrichtung erreicht, da hierdurch der Leichtgutauslass lediglich eine geringere Fläche aufweist.

Ganz besonders bevorzugt weist die Zentrifugal-Trennvorrichtung zumindest abschnittsweise auf der dem Strömungserzeuger zugewandten Seite eine Innenwand mit zumindest einer Öffnung zum Führen der Gasströmung zum Strömungserzeuger auf.

Dies hat den Vorteil, dass die Innenwand der Zentrifugal-Trennvorrichtung, die dem Strömungserzeuger zugewandt ist, die Führung der Gasströmung zum Strömungserzeuger gewährleistet und gleichzeitig in den Bereichen der Innenwand ohne Öffnung eine Barriere für die Leichtgutfraktion in der Gasströmung darstellt. Hierdurch wird im Wesentlichen sichergestellt, dass möglichst wenig Partikel der Leichtgutfraktion in den Strömungserzeuger gefördert werden.

Alternativ ist es jedoch möglich, dass auf die Innenwand im Auslassbereich verzichtet wird, wodurch ebenfalls eine Führung der Gasströmung zum Strömungserzeuger ermöglicht wird.

Bevorzugt ist die Förderrichtung der Fördereinrichtung zumindest im Wesentlichen horizontal ausgebildet, insbesondere abschnittsweise entlang einer Längsachse der Fraktioniervorrichtung.

Unter dem Begriff "horizontal" wird im Sinne der vorliegenden Anmeldung eine Richtung im Wesentlichen senkrecht zur Wirkungsrichtung der Gravitation verstanden.

Dies hat den Vorteil, dass durch die horizontale Förderrichtung das Aufgabegut zuverlässig unter weitgehendem Ausschluss beispielsweise der Gravitation zuverlässig förderbar ist, wodurch eine bessere Kontrollierbarkeit der Verteilung des Aufgabeguts in der Fraktioniervorrichtung erreicht wird.

Besonders bevorzugt ist die Zentrifugal-Trennvorrichtung innenseitig glatt ausgebildet. Insbesondere weist die Zentrifugal-Trennvorrichtung auf einer Produktführungswand keinen unstetigen Wandverlauf auf.

Unter der "Produktführungswand" wird im Sinne der vorliegenden Anmeldung diejenige Wand der Zentrifugal-Trennvorrichtung verstanden, an die bei bestimmungsgemässen Gebrauch die Leichtgutfraktion aufgrund der Zentrifugalkraft gefördert wird und aufgrund der Gasströmung entlang dieser Produktführungswand geführt wird.

Unter dem Begriff "stetig" wird im Sinne der vorliegenden Anmeldung die mathematische Definition dieses Begriffes verstanden. Mit anderen Worten weist der Wandverlauf keine Unstetigkeiten wie beispielsweise vorspringende oder rückspringende Stufen auf.

Diese glatte Ausbildung und insbesondere auch die Ausbildung als stetige Wand haben den Vorteil, dass weniger Produktablagerungen von Leichtgut in der Fraktioniervorrichtung möglich sind, was zur Verbesserung der Hygiene beiträgt.

Unter dem Begriff "glatt" wird im Sinne der vorliegenden Anmeldung eine mittlere Oberflächenrauheit Ra im Bereich von 0,2µm bis 6,3µm und insbesondere von 0,8 µm bis 3,2µm verstanden.

Die mittlere Oberflächenrauheit Ra wird auch als Mittenrauhwert bezeichnet.

Die Oberflächenrauheit wird dabei gemäss DIN EN ISO 4287 gemessen, beispielsweise mit einem Perthometer M2 der Firma Maar.

Ganz besonders bevorzugt ist mit der Fördereinrichtung Aufgabegut entlang der Längsachse der Fraktioniervorrichtung verteilbar.

Bevorzugt weist die Innenwand eine Einrichtung zur Führung der Gasströmung zum Strömungserzeuger auf.

Dies hat den Vorteil, dass die Gasströmung, die im Kreislauf zum Strömungserzeuger aus der Zentrifugal-Trennvorrichtung geführt wird, besser kontrollierbar ist. Dies hat den weiteren Vorteil, dass die Anzahl Partikel der Leichtgutfraktion verringert wird, die in den Strömungserzeuger gefördert werden, was die Zuverlässigkeit und Lebensdauer der Fraktioniervorrichtung erhöht.

Besonders bevorzugt ist die Einrichtung zur Führung als zumindest eine Lamelle ausgebildet, wobei die Lamelle in die Zentrifugal-Trennvorrichtung ragt.

Unter einer "Lamelle" wird im Sinne der vorliegenden Anmeldung ein im Wesentlichen rechteckiges Flächenelement verstanden, d.h. eine Länge ist grösser als eine Breite und die Breite ist grösser als eine Dicke des Flächenelements.

Die Lamelle hat eine Länge im Wesentlichen parallel zur Längsachse der Fraktioniervorrichtung. Die Lamelle ragt in die Zentrifugal-Trennvorrichtung hinein, wobei die Lamelle im Bereich von 1mm bis 20mm, bevorzugt von 2mm bis 10mm und besonders bevorzugt von 3mm bis 8mm in die Zentrifugal-Trennvorrichtung ragt.

Ganz besonders bevorzugt weist die Lamelle mit der Innenwand einen Winkel im Bereich von 90° bis 180°, bevorzugt von 100° bis 170° und besonders bevorzugt von 140° bis 160° auf.

Der Winkel wird im Sinne der vorliegenden Anmeldung im Gegenuhrzeigersinn ausgehend von der Innenwand bestimmt, wobei ein Winkel von 90° eine senkrechte auf der Innenwand auf der der Zentrifugal-Trennvorrichtung zugewandten Seite im Querschnitt zur Kreislaufströmung entspricht.

Bevorzugt ist der Winkel der Lamelle einstellbar.

Dies hat den Vorteil, dass die Führung des Gases im Kreislauf einstellbar ist, um die Effizienz der Kreislaufströmung zu verbessern und gleichzeitig die Förderung von Partikeln aus der Leichtgutfraktion in den Strömungserzeuger zu minimieren.

Ein weiterer Aspekt der vorliegenden Erfindung ist gerichtet auf ein Verfahren zum Trennen von Aufgabegut in zumindest eine Leichtgutfraktion und zumindest eine Schwergutfraktion mittels einer Fraktioniervorrichtung. Dieses Verfahren wird insbesondere mit einer Vorrichtung wie oben beschrieben durchgeführt. Die Fraktioniervorrichtung umfasst zumindest einen Einlass für das Aufgabegut, zumindest einen Leichtgutauslass und zumindest einen Schwergutauslass. Weiter umfasst die Fraktioniervorrichtung einen Strömungserzeuger, eine gekrümmte Zentrifugal-Trennvorrichtung und eine Förderrichtung. Das Verfahren umfasst den Schritt des Förderns des Aufgabeguts in zumindest einen Einlass der Fraktioniervorrichtung, woraufhin anschliessend das Aufgabegut auf und/oder in eine stromab vom Einlass angeordnete Fördereinrichtung gefördert wird. Anschliessend erfolgt ein Fördern des Aufgabeguts mittels der Fördereinrichtung in die Zentrifugal-Trennvorrichtung. Daraufhin anschliessend erfolgt ein Trennen der Leichtgutfraktion von der Schwergutfraktion mittels einer durch den Strömungserzeuger erzeugten Gasströmung. Anschliessend erfolgt ein Trennen der Leichtgutfraktion von der Gasströmung in der Zentrifugal-Trennvorrichtung, wobei zumindest 50% des Gases in der Gasströmung als Kreislaufströmung in der Fraktioniervorrichtung geführt wird. Die Kreislaufströmung wird um die Fördereinrichtung geführt.

Dieses Verfahren weist alle oben zur Fraktioniervorrichtung erläuterten Vorteile auf.

Bevorzugt erfolgt das Trennen der Leichtgutfraktion von der Schwergutfraktion mittels der Gasströmung und der Gravitation.

Das Aufgabegut wird also mittels der Fördereinrichtung in die Zentrifugal-Trennvorrichtung gefördert, wobei durch die Gasströmung lediglich die Leichtgutfraktion gefördert wird entlang der Zentrifugal-Trennvorrichtung. Die Schwergutfraktion wird durch die Gravitation zum Schwergutauslass gefördert zu Weiterverarbeitung.

Dies hat den Vorteil, dass durch die Einstellung der Gasströmung die Fraktionierung entsprechend den Anforderungen eingestellt werden kann. Zudem wird für die Abtrennung der Schwergutfraktion mittels Gravitation keine weitere Vorrichtung benötigt, wodurch das Verfahren energieeffizienter durchführbar ist.

Besonders bevorzugt wird das Aufgabegut entlang der Längsachse der Fraktioniervorrichtung verteilt mittels der Fördereinrichtung.

Dies hat den Vorteil, dass eine möglichst gleichmässige Verteilung entlang der Längsachse der Fraktioniervorrichtung erreichbar ist, wodurch die Trennung zuverlässiger und genauer erfolgt.

Ganz besonders bevorzugt umfasst die Kreislaufströmung einen Anteil an Gas der Gasströmung im Bereich von 55% bis 95%, bevorzugt von 65% bis 90% und besonders bevorzugt von 75% bis 85%.

Dies hat den Vorteil, dass ein möglichst grosser Anteil an Gas in der Kreislaufströmung geführt wird, wodurch der Energieverbrauch und auch der Luftverbrauch der Fraktioniervorrichtung gesenkt wird.

Weitere Vorteile der erfindungsgemässen Vorrichtung und des erfindungsgemässen Verfahrens werden nachfolgend anhand von Figuren und Ausführungsbeispielen zum besseren Verständnis näher erläutert, ohne die Erfindung auf diese zu beschränken. Es zeigen:
- Figur 1:: Schematische Darstellung einer erfindungsgemässen Fraktioniervorrichtung im Schnitt parallel zu Kreislaufströmung durch die Zentrifugal-Trennvorrichtung;
- Figur 2:: Perspektivische Darstellung einer erfindungsgemässen Fraktioniervorrichtung gemäss Figur 1;
- Figur 3:: Perspektivische Darstellung der erfindungsgemässen Fraktioniervorrichtung gemäss Figur 1 mit sichtbarer Fördereinrichtung.

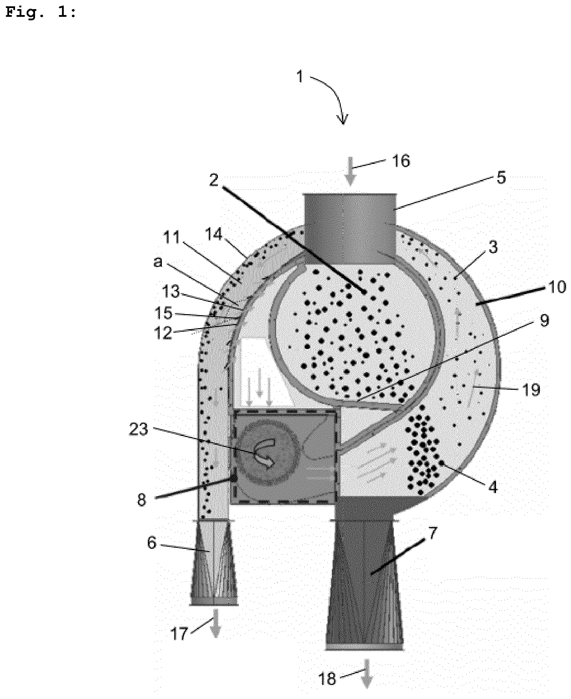

In Figur 1 ist in schematischer Darstellung eine erfindungsgemässe Fraktioniervorrichtung 1 im Querschnitt parallel zu einer Kreislaufströmung durch eine Zentrifugal-Trennvorrichtung 10 der Fraktioniervorrichtung 1 dargestellt.

Die Fraktioniervorrichtung 1 weist einen Einlass 5 für das Aufgabegut 2 auf sowie einen Leichtgutauslass 6 für die Leichtgutfraktion 3 und einen Schwergutauslass 7 für die Schwergutfraktion 4. Weiterhin weist die Fraktioniervorrichtung 1 einen als Ventilator ausgebildeten Strömungserzeuger 8 auf zur Erzeugung einer Luftströmung in der Fraktioniervorrichtung 1. Die Fraktioniervorrichtung 1 weist weiter eine Zentrifugal-Trennvorrichtung 10 auf mit einer gekrümmten Produktführungswand 14 zum Führen der Leichtgutfraktion. In einem Auslassbereich 11, der hier nicht konisch zulaufend ausgebildet ist, ist auf der dem Ventilator zugewandten Seite eine Innenwand 12 mit mehreren Öffnungen 13 zum Führen der Luftströmung zum Ventilator angeordnet. Diese Innenwand 12 weist zudem mehrere Lamellen 15 zum besseren Führen der Luft in den Ventilator auf.

Aufgabegut 2 wird im Betrieb entlang des Pfeils 16 in den Einlass 5 der Fraktioniervorrichtung 1 gefördert und fällt stromab vom Einlass 5 auf eine als Schwingförderer ausgebildete Fördereinrichtung 9 zum Fördern des Aufgabeguts in die Zentrifugal-Trennvorrichtung. Der Schwingförderer ist als sogenannte Vibrowanne ausgebildet, die mittels eines nicht sichtbaren Spalts mit der Zentrifugal-Trennvorrichtung 10 verbunden ist, wobei durch den Spalt Aufgabegut förderbar ist.

Mittels des als Ventilator ausgebildeten Strömungserzeugers 8 wird eine Luftströmung in der Fraktioniervorrichtung entlang der mit 19 bezeichneten Pfeile erzeugt. Hierbei wird 80% der Luftströmung durch die Öffnungen 13 wieder dem Ventilator zugeführt. Es wird also 20% Frischluft jeweils durch den Ventilator angesaugt.

Mittels der Luftströmung 19 wird nun die Leichtgutfraktion 3 von der Schwergutfraktion 4 getrennt. Dies erfolgt durch Einstellen der Strömungsgeschwindigkeit der Luft, so dass die Leichtgutfraktion 3 entgegen der Wirkungsrichtung der Schwerkraft, die im Wesentlichen parallel zum Pfeil 16 wirkt, in einen ersten Abschnitt der Zentrifugal-Trennvorrichtung 10 gefördert wird. Die Schwergutfraktion 4 wird durch die Schwerkraft in den Schwergutauslass 7 gefördert und verlässt die Fraktioniervorrichtung entlang des Pfeils 18.

Die Leichtgutfraktion 3 wird in der Zentrifugal-Trennvorrichtung 10 im Wesentlichen auf die Geschwindigkeit der Luftströmung 19 beschleunigt und durch die Zentrifugalkraft zur Produktführungswand 14 gefördert. Hierdurch sammelt sich die Leichtgutfraktion im Wesentlichen an der Produktführungswand 14, wodurch eine Trennung der Leichtgutfraktion 3 von der Luftströmung erfolgt.

Die Leichtgutfraktion 3 wird somit entlang der Produktführungswand 14 zum Leichtgutauslass 6 gefördert und verlässt die Fraktioniervorrichtung entlang des Pfeils 17. Hierbei wird auch 20% der Luftströmung durch den Leichtgutauslass 6 aus der Fraktioniervorrichtung 1 gefördert.

Mittels des Ventilators wird etwa 80% der Luft aus dem Auslassbereich 11 abgesaugt und wieder der Zentrifugal-Trennvorrichtung 10 zugeführt. Mittels der Lamellen 15, die einen Winkel α von 150° mit der Innenwand 12 aufweisen, wird sichergestellt, dass die rückgeführte Luft in den Ventilator im Wesentlichen frei von Partikeln der Leichtgutfraktion 3 ist.

Im Ventilator werden die rückgeführte Luft sowie auch die angesaugte Frischluft auf die für die Trennung des Aufgabeguts 2 in die Leichtgutfraktion 3 und die Schwergutfraktion 4 notwendige Geschwindigkeit beschleunigt, was durch den Pfeil 23 angedeutet ist.

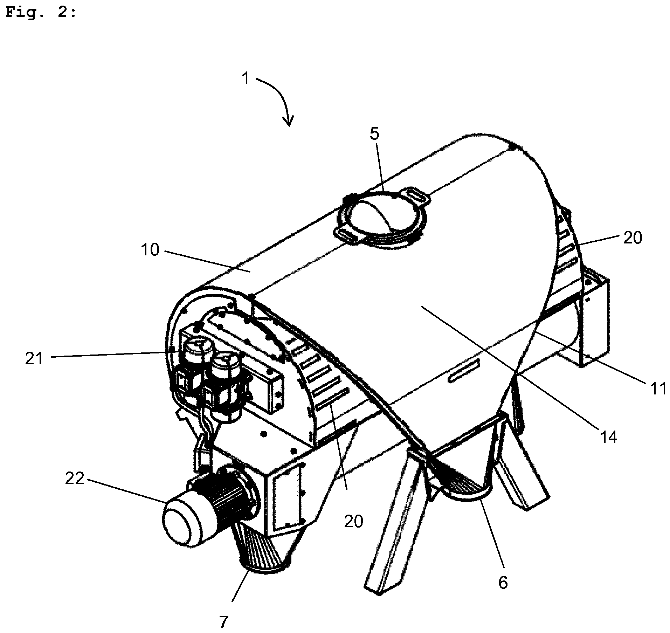

In Figur 2 ist eine alternative erfindungsgemässe Fraktioniervorrichtung 1 dargestellt.

Von hier an und im Folgenden bedeuten gleiche Referenzzeichen gleiche Komponenten in den Figuren.

Im Unterschied zur Figur 1 ist hier der Auslassbereich 11 in Strömungsrichtung konisch zulaufend ausgebildet.

Zusätzlich zur Darstellung gemäss Figur 1 sind hier Lüftungsschlitze 20 sichtbar, die der Ansaugung von Frischluft dienen. Weiterhin sind hier Antriebe 21 für die nicht sichtbare Fördereinrichtung gezeigt sowie der Antrieb 22 für den nicht sichtbaren Strömungserzeuger.

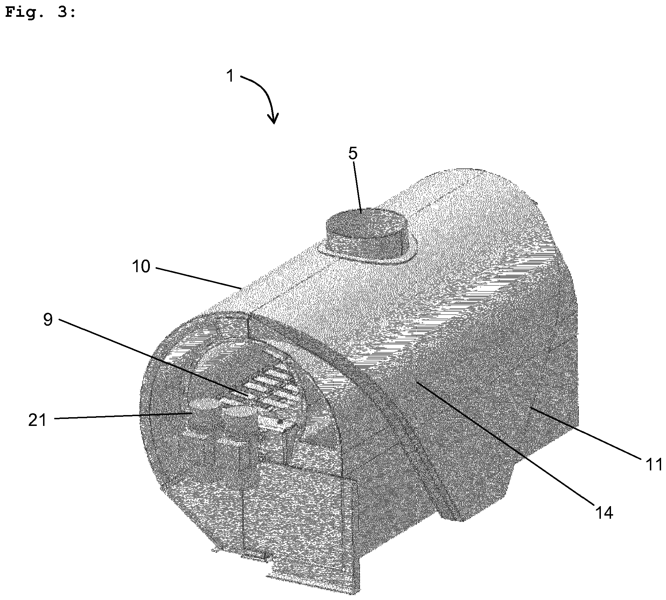

In Figur 3 ist die Fraktioniervorrichtung 1 gemäss Figur 2 dargestellt, wobei zur besseren Übersicht einige Elemente weggelassen wurden.

Die hier seitlich offen dargestellte Fraktioniervorrichtung 1 zeigt die als Schwingförderer ausgebildete Fördereinrichtung 9 mit den dazu gehörigen Antrieben 21 auf. Mittels dieser Fördereinrichtung 9 kann nun in die Fraktioniervorrichtung 1 durch den Einlass 5 gefördertes Aufgabegut entlang der Längsachse der Fraktioniervorrichtung 1 im Wesentlichen parallel zum Schwingförderer bzw. senkrecht zur Wirkung der Gravitationsrichtung gefördert werden zur Verteilung des Aufgabeguts über die Längsachse der Fraktioniervorrichtung 1.

## Patentansprüche

1. Fraktioniervorrichtung (1) zum Trennen von Aufgabegut (2) in zumindest eine Leichtgutfraktion (3) und eine Schwergutfraktion (4), umfassend zumindest einen Einlass (5) für das Aufgabegut (2), zumindest einen Leichtgutauslass (6) für die Leichtgutfraktionen (3) und zumindest einen Schwergutauslass (7) für die Schwergutfraktion (4), einen Strömungserzeuger (8) zur Erzeugung einer Gasströmung, insbesondere einer Luftströmung, in der Fraktioniervorrichtung (1) zur Trennung des Aufgabeguts (2) in die Leichtgutfraktionen (3) und die Schwergutfraktion (4), eine gekrümmte Zentrifugal-Trennvorrichtung (10) zur Trennung zumindest der Leichtgutfraktionen (3) von der Gasströmung, eine in Förderrichtung des Aufgabeguts stromab vom Einlass (5) angeordnete Fördereinrichtung (9) zum Fördern des Aufgabeguts (2) in die Zentrifugal-Trennvorrichtung (10), wobei in der Fraktioniervorrichtung (1) zumindest 50 % des Gases als Kreislaufströmung führbar ist, **dadurch gekennzeichnet, dass** die Kreislaufströmung im Querschnitt durch die Zentrifugal-Trennvorrichtung (10) um die in der Fraktioniervorrichtung (1) angeordnete Fördereinrichtung (9) geführt wird.

2. Fraktioniervorrichtung (1) nach Anspruch 1, **dadurch gekennzeichnet, dass** die Fördereinrichtung (9) als Schwingförderer ausgebildet ist, insbesondere zumindest zum Fördern des Aufgabeguts (2) im Wesentlichen senkrecht zur Querschnittsfläche durch die Kreislaufströmung.

3. Fraktioniervorrichtung (1) nach Anspruch 1 oder 2, **dadurch gekennzeichnet, dass** die Zentrifugal-Trennvorrichtung (10) in Strömungsrichtung in einem Auslassbereich (11) für die Leichtgutfraktionen (3) zumindest abschnittsweise verengend und insbesondere konisch zulaufend ausgebildet ist.

4. Fraktioniervorrichtung (1) nach einem der Ansprüche 1 bis 3, **dadurch gekennzeichnet, dass** die Zentrifugal-Trennvorrichtung (10) zumindest abschnittsweise auf der dem Strömungserzeuger (8) zugewandten Seite im Auslassbereich (11) eine Innenwand (12) mit zumindest einer Öffnung (13) zum Führen der Gasstömung zum Strömungserzeuger (8) aufweist.

5. Fraktioniervorrichtung (1) nach einem der Ansprüche 1 bis 4, **dadurch gekennzeichnet, dass** die Förderrichtung der Fördereinrichtung (9) zumindest im Wesentlichen horizontal ausgebildet ist, insbesondere abschnittsweise entlang einer Längsachse der Fraktioniervorrichtung (1).

6. Fraktioniervorrichtung (1) nach Anspruch 5, **dadurch gekennzeichnet, dass** mit der Fördereinrichtung (9) Aufgabegut (2) entlang der Längsachse der Fraktioniervorrichtung (1) verteilbar ist.

7. Fraktioniervorrichtung (1) nach einem der Ansprüche 1 bis 6, **dadurch gekennzeichnet, dass** die Zentrifugal-Trennvorrichtung (10) innenseitig glatt ausgebildet ist und insbesondere auf einer Produktführungswand (14) einen stetigen Wandverlauf aufweist.

8. Fraktioniervorrichtung (1) nach einem der Ansprüche 4 bis 7, **dadurch gekennzeichnet, dass** die Innenwand (12) eine Einrichtung zur Führung der Gasströmung zum Strömungserzeuger (8) aufweist.

9. Fraktioniervorrichtung (1) nach Anspruch 8, **dadurch gekennzeichnet, dass** die Einrichtung zur Führung als zumindest eine Lamelle (15) ausgebildet ist, wobei die Lamelle (15) in die Zentrifugal-Trennvorrichtung (10) ragt.

10. Fraktioniervorrichtung (1) nach Anspruch 9, **dadurch gekennzeichnet, dass** die Lamelle (15) mit der Innenwand (12) einen Winkel (a) im Bereich von 90° bis 180°, bevorzugt von 100° bis 170° und besonders bevorzugt von 140° bis 160° aufweist.

11. Fraktioniervorrichtung (1) nach Anspruch 10, **dadurch gekennzeichnet, dass** der Winkel (a) einstellbar ist.

12. Verfahren zum Trennen von Aufgabegut (2) in zumindest eine Leichtgutfraktion (3) und eine Schwergutfraktion (4) mittels einer Fraktioniervorrichtung (1), insbesondere gemäss einem der Ansprüche 1 bis 11, umfassend zumindest einen Einlass (5) für das Aufgabegut (2), zumindest einen Leichtgutauslass (6) und zumindest einen Schwergutauslass (7), einen Strömungserzeuger (8), eine gekrümmte Zentrifugal-Trennvorrichtung (10) und eine Fördereinrichtung (9), umfassend die folgenden Schritte:
- Fördern des Aufgabeguts (2) in zumindest einen Einlass (5) der Fraktioniervorrichtung (1) auf und / oder in eine stromab vom Einlass (5) angeordnete Fördereinrichtung (9),
- Fördern des Aufgabeguts (2) mittels der Fördereinrichtung (9) in die Zentrifugal-Trennvorrichtung (10),
- Trennen der Leichtgutfraktion (3) von der Schwergutfraktion (4) mittels der durch den Strömungserzeuger (8) erzeugten Gasströmung in der Zentrifugal-Trennvorrichtung (10),
- Trennen der Leichtgutfraktion (3) von der Gasströmung in der Zentrifugal-Trennvorrichtung (10), und
- Führen von zumindest 50% des Gases in der Gasströmung als Kreislaufströmung in der Fraktioniervorrichtung (1), **gekennzeichnet durch** das
- Führen der Kreislaufströmung im Querschnitt durch die Zentrifugal-Trennvorrichtung (10) um die in der Fraktioniervorrichtung (1) angeordnete Fördereinrichtung (9).

13. Verfahren nach Anspruch 12, **dadurch gekennzeichnet, dass** das Trennen der Leichtgutfraktionen (3) von der Schwergutfraktion (4) mittels der Gasströmung und der Gravitation erfolgt.

14. Verfahren nach Anspruch 12 oder 13, **dadurch gekennzeichnet, dass** das Aufgabegut (2) entlang der Längsachse der Fraktioniervorrichtung (1) verteilt wird mittels der Fördereinrichtung (9).

15. Verfahren nach einem der Ansprüche 12 bis 14, **dadurch gekennzeichnet, dass** die Kreislaufströmung einen Anteil Gas der Gasströmung im Bereich von 55% bis 95%, bevorzugt von 65% bis 90% und besonders bevorzugt von 75% bis 85 % umfasst.

## Claims

1. Fractionating device (1) for separating feedstock (2) into at least one light material fraction (3) and a heavy material fraction (4), comprising at least one inlet (5) for the feedstock (2), at least one light material outlet (6) for the light material fractions (3), and at least one heavy material outlet (7) for the heavy material fraction (4), a flow generator (8) for generating a gas flow, in particular an air flow, in the fractionating device (1) for separating the feedstock (2) into the light material fractions (3) and the heavy material fraction (4), a curved centrifugal separating device (10) for separating at least the light material fractions (3) from the gas flow, a conveying device (9), arranged downstream of the inlet (5) in the conveying direction of the feedstock, for conveying the feedstock (2) into the centrifugal separating device (10), wherein at least 50% of the gas is conductible as a circulatory flow in the fractionating device (1), **characterized in that** the circulatory flow is conducted in crosss section through the centrifugal separating device (10) around the conveying device (9) arranged in the fractionating device (1).

2. Fractionating device (1) according to Claim 1, **characterized in that** the conveying device (9) is in the form of an oscillating conveyor, in particular at least for conveying the feedstock (2) substantially perpendicularly to the cross-sectional area through the circulatory flow.

3. Fractionating device (1) according to Claim 1 or 2, **characterized in that** the centrifugal separating device (10) is configured in an at least sectionally narrowing and in particular conically tapering manner in the direction of flow in an outlet region (11) for the light material fractions (3).

4. Fractionating device (1) according to one of Claims 1 to 3, **characterized in that** the centrifugal separating device (10) has in the outlet region (11), at least sectionally on the side facing the flow generator (8), an inner wall (12) having at least one opening (13) for conducting the gas flow to the flow generator (8).

5. Fractionating device (1) according to one of Claims 1 to 4, **characterized in that** the conveying direction of the conveying device (9) is configured in an at least substantially horizontal manner, in particular sectionally along a longitudinal axis of the fractionating device (1).

6. Fractionating device (1) according to Claim 5, **characterized in that** feedstock (2) is distributable along the longitudinal axis of the fractionating device (1) by way of the conveying device (9).

7. Fractionating device (1) according to one of Claims 1 to 6, **characterized in that** the centrifugal separating device (10) is configured in a smooth manner on the inside and in particular has a continuous wall profile on a product-conducting wall (14).

8. Fractionating device (1) according to one of Claims 4 to 7, **characterized in that** the inner wall (12) has a device for conducting the gas flow to the flow generator (8).

9. Fractionating device (1) according to Claim 8, **characterized in that** the device for conducting is in the form of at least one lamella (15), wherein the lamella (15) projects into the centrifugal separating device (10).

10. Fractionating device (1) according to Claim 9, **characterized in that** the lamella (15) forms an angle (a) in the range of 90° to 180°, preferably of 100° to 170° and particularly preferably of 140° to 160° with the inner wall (12).

11. Fractionating device (1) according to Claim 10, **characterized in that** the angle (a) is adjustable.

12. Method for separating feedstock (2) into at least one light material fraction (3) and a heavy material fraction (4) by means of a fractionating device (1), in particular according to one of Claims 1 to 11, comprising at least one inlet (5) for the feedstock (2), at least one light material outlet (6) and at least one heavy material outlet (7), a flow generator (8), a curved centrifugal separating device (10) and a conveying device (9), comprising the following steps of:
- conveying the feedstock (2) into at least one inlet (5) of the fractionating device (1) onto and/or into a conveying device (9) arranged downstream of the inlet (5),
- conveying the feedstock (2) into the centrifugal separating device (10) by means of the conveying device (9),
- separating the light material fractions (3) from the heavy material fraction (4) by means of the gas flow, generated by the flow generator (8), in the centrifugal separating device (10),
- separating the light material fraction (3) from the gas flow in the centrifugal separating device (10), and
- conducting at least 50% of the gas in the gas flow as a circulatory flow in the fractionating device (1), **characterized by**
- conducting the circulatory flow in cross section through the centrifugal separating device (10) around the conveying device (9) arranged in the fractionating device (1).

13. Method according to Claim 12, **characterized in that** the separation of the light material fractions (3) from the heavy material fraction (4) takes place by means of the gas flow and gravity.

14. Method according to Claim 12 or 13, **characterized in that** the feedstock (2) is distributed along the longitudinal axis of the fractionating device (1) by means of the conveying device (9).

15. Method according to one of Claims 12 to 14, **characterized in that** the circulatory flow comprises a proportion of gas in the gas flow in the range of 55% to 95%, preferably of 65% to 90% and particularly preferably of 75% to 85%.

## Revendications

1. Dispositif de fractionnement (1) pour la séparation de matière de charge (2) en au moins une fraction légère (3) et une fraction lourde (4), comprenant au moins une admission (5) pour la matière de charge (2), au moins une sortie de produit de faible poids (6) pour les fractions légères (3) et au moins une sortie de produit de poids lourd (7) pour la fraction lourde (4), un générateur de flux (8) pour produire un flux de gaz, notamment un flux d'air, dans le dispositif de fractionnement (1) afin de séparer la matière de charge (2) en fractions légères (3) et en fraction lourde (4), un dispositif de séparation par centrifugation (10) coudé servant à séparer au moins les fractions légères (3) du flux de gaz, un dispositif de transport (9) disposé dans la direction de transport de la matière de charge en aval de l'admission (5) pour transporter la matière de charge (2) jusque dans le dispositif de séparation par centrifugation (10), au moins 50 % du gaz pouvant être guidé sous la forme d'un flux circulaire dans le dispositif de fractionnement (1), **caractérisé en ce que** le flux circulaire est guidé en section transversale à travers le dispositif de séparation par centrifugation (10), autour du dispositif de transport (9) disposé dans le dispositif de fractionnement (1).

2. Dispositif de fractionnement (1) selon la revendication 1, **caractérisé en ce que** le dispositif de transport (9) est réalisé sous la forme d'un convoyeur oscillant, notamment au moins pour le transport de la matière de charge (2) à travers le flux circulaire, pour l'essentiel perpendiculairement à la surface de section transversale.

3. Dispositif de fractionnement (1) selon la revendication 1 ou 2, **caractérisé en ce que** le dispositif de séparation par centrifugation (10) est réalisé dans une zone de sortie (11) pour les fractions légères (3) dans la direction du flux, au moins en se rétrécissant en partie et notamment en s'effilant de façon conique.

4. Dispositif de fractionnement (1) selon l'une quelconque des revendications 1 à 3, **caractérisé en ce que** le dispositif de séparation par centrifugation (10) comporte, au moins en partie sur le côté orienté vers le générateur de flux (8) dans la zone de sortie (11), une paroi intérieure (12) avec au moins une ouverture (13) prévue pour le guidage du flux de gaz en direction du générateur de flux (8).

5. Dispositif de fractionnement (1) selon l'une quelconque des revendications 1 à 4, **caractérisé en ce que** la direction de transport du dispositif de transport (9) est réalisée au moins pour l'essentiel de façon horizontale, notamment en partie le long d'un axe longitudinal du dispositif de fractionnement (1).

6. Dispositif de fractionnement (1) selon la revendication 5, **caractérisé en ce que** la matière de charge (2) peut être répartie le long de l'axe longitudinal du dispositif de fractionnement (1) avec le dispositif de transport (9).

7. Dispositif de fractionnement (1) selon l'une quelconque des revendications 1 à 6, **caractérisé en ce que** le dispositif de séparation par centrifugation (10) est réalisé de façon lisse sur le côté intérieur et présente notamment sur une paroi de guidage de produit (14) un tracé de paroi constant.

8. Dispositif de fractionnement (1) selon l'une quelconque des revendications 4 à 7, **caractérisé en ce que** la paroi intérieure (12) comporte un dispositif de guidage du flux de gaz en direction du générateur de flux (8).

9. Dispositif de fractionnement (1) selon la revendication 8, **caractérisé en ce que** le dispositif servant au guidage est réalisé au moins comme une lamelle (15), la lamelle (15) rentrant dans le dispositif de séparation par centrifugation (10).

10. Dispositif de fractionnement (1) selon la revendication 9, **caractérisé en ce que** la lamelle (15) forme avec la paroi intérieure (12) un angle (a) dans la plage de 90° à 180°, de façon préférée de 100° à 170° et de façon particulièrement préférée de 140° à 160°.

11. Dispositif de fractionnement (1) selon la revendication 10, **caractérisé en ce que** l'angle (a) est réglable.

12. Procédé pour la séparation de matière de charge (2) en au moins une fraction légère (3) et une fraction lourde (4) à l'aide d'un dispositif de fractionnement (1), notamment selon l'une quelconque des revendications 1 à 11, comprenant au moins une admission (5) pour la matière de charge (2), au moins une sortie de produit de faible poids (6) et au moins une sortie de produit de poids lourd (7), un générateur de flux (8), un dispositif de séparation par centrifugation (10) coudé et un dispositif de transport (9), comprenant les étapes suivantes :
- transport de la matière de charge (2) dans au moins une admission (5) du dispositif de fractionnement (1) et / ou dans un dispositif de transport (9) disposé en aval de l'admission (5) ;
- transport de la matière de charge (2) jusque dans le dispositif de séparation par centrifugation (10) à l'aide du dispositif de transport (9) ;
- séparation de la fraction légère (3) hors de la fraction lourde (4) à l'aide du flux de gaz produit dans le générateur de flux (8) dans le dispositif de séparation par centrifugation (10) ;
- séparation de la fraction légère (3) hors du flux de gaz dans le dispositif de séparation par centrifugation (10) ; et
- guidage d'au moins 50 % du gaz dans le flux de gaz sous la forme d'un flux circulaire dans le dispositif de fractionnement (1) ;
**caractérisé par** :
- guidage du flux circulaire en section transversale à travers le dispositif de séparation par centrifugation (10), autour du dispositif de transport (9) disposé dans le dispositif de fractionnement (1).

13. Procédé selon la revendication 12, **caractérisé en ce que** la séparation des fractions légères (3) hors de la fraction lourde (4) s'effectue à l'aide du flux de gaz et de la gravitation.

14. Procédé selon la revendication 12 ou 13, **caractérisé en ce que** la matière de charge (2) est répartie le long de l'axe longitudinal du dispositif de fractionnement (1) à l'aide du dispositif de transport (9) .

15. Procédé selon l'une quelconque des revendications 12 à 14, **caractérisé en ce que** le flux circulaire comprend une fraction gazeuse du flux de gaz dans la plage de 55 % à 95 %, de façon préférée de 65 % à 90 % et de façon particulièrement préférée de 75 % à 85 %.
